# EUROPÄISCHE PATENTANMELDUNG

(11) **EP 3 391 980 A1**
(43) Veröffentlichungstag der Anmeldung: **24.10.2018**
(21) Anmeldenummer: 18165025.0
(22) Anmeldetag: 29.03.2018
(51) Int. Cl.: B22F 1/00, B22F 3/11, B22F 7/00, H01M 4/86

(54) **VERFAHREN ZUR HERSTELLUNG EINER FUNKTIONSSCHICHT**

(30) Priorität: 20.04.2017 DE 102017206693
(71) Anmelder: Robert Bosch GmbH, 70442 Stuttgart (DE)
(72) Erfinder: Matte, Eric, 70180 Stuttgart (DE); Maier, Nicolas, 70435 Stuttgart (DE); Lupetin, Piero, 70567 Stuttgart (DE); Marbaix, Julien, 31400 Toulouse (FR)

(57) **Zusammenfassung**

Die Erfindung geht aus von einem Verfahren zur Herstellung einer Funktionsschicht (10), insbesondere einer Brennstoffzellenfunktionsschicht, mit zumindest einem Verfahrensschritt (12), in dem zumindest ein pulverförmiges Material (14), welches zur Ausbildung zumindest eines Teils eines Funktionsschichtelements (16, 62) vorgesehen ist, mit zumindest einem ersten weiteren pulverförmigen Material (18) und mit zumindest einem zweiten weiteren pulverförmigen Material (20), welches sich von dem ersten weiteren pulverförmigen Material (18) wesentlich in zumindest seiner Partikelgrößenverteilung (24) unterscheidet, zu einem Gemisch (38) vermischt wird, und mit zumindest einem weiteren Verfahrensschritt (22), in dem das Gemisch (38, 38a-g) gesintert wird.

Es wird vorgeschlagen, dass das erste weitere pulverförmige Material (18) und das zweite weitere pulverförmige Material (20) als Porenbildner ausgebildet sind.

## Beschreibung

### Stand der Technik

Es ist bereits ein Verfahren zur Herstellung einer Funktionsschicht vorgeschlagen worden, bei dem ein Ausgangsmaterial mit einem Porenbildner vermischt wird, und bei dem in einem Sintervorgang durch den Porenbildner Poren in der Funktionsschicht ausgebildet werden.

### Offenbarung der Erfindung

Die Erfindung geht aus von einem Verfahren zur Herstellung einer Funktionsschicht, insbesondere einer Brennstoffzellenfunktionsschicht, insbesondere einer Brennstoffzellenelektrode, mit zumindest einem Verfahrensschritt, in dem zumindest ein pulverförmiges Material, welches zur Ausbildung eines Funktionsschichtelements vorgesehen ist, mit zumindest einem ersten weiteren pulverförmigen Material und mit zumindest einem zweiten weiteren pulverförmigen Material, welches sich von dem ersten weiteren pulverförmigen Material wesentlich in zumindest seiner Partikelgrößenverteilung unterscheidet, zu einem Gemisch, insbesondere in Form einer druckbaren Paste, insbesondere homogen, vermischt wird, und mit zumindest einem weiteren Verfahrensschritt, in dem das Gemisch gesintert wird.

Es wird vorgeschlagen, dass das erste weitere pulverförmige Material und das zweite weitere pulverförmige Material als Porenbildner ausgebildet sind.

Vorteilhaft kann mittels der Kombination von zumindest zwei Porenbildnern in dem Herstellungsverfahren eine definierte Mikrostruktur einer Funktionsschicht erreicht werden. Dadurch kann vorteilhaft zumindest ein Materialparameter, insbesondere ein Elektrodenparameter, beispielsweise eine Gas-Permeabilität, eine elektrische und/oder ionische Leitfähigkeit, eine Tortuosität und/oder eine Anzahl an Reaktionszentren, insbesondere sogenannter Dreiphasengrenzen, der Funktionsschicht, insbesondere gezielt, eingestellt werden. Vorteilhaft kann die Struktur der Funktionsschicht so angepasst werden, dass bestimmte Vorgaben an zumindest einen Materialparameter erfüllt werden können. Mittels einer derartigen Einstellbarkeit kann vorteilhaft eine Effizienz des Verfahrens, beispielsweise durch eine Verringerung von Ausschuss oder Fehlproduktionen, sowie eine Flexibilität des Verfahrens erhöht werden. Zudem kann vorteilhaft eine Leistungsfähigkeit und/oder ein Verhalten einer Funktionsschicht angepasst und verbessert werden, wodurch vorteilhaft eine Gesamtleistung und/oder eine Effizienz eines Systems, welches die Funktionsschicht aufweist, beispielsweise eine Festoxidbrennstoffzelle, verbessert werden kann. Vorteilhaft kann zudem eine einstellbare Mikrostrukturierung eine Wirkeffizienz der Funktionsschicht verbessern.

Unter einer "Funktionsschicht" soll insbesondere eine Schicht verstanden werden, welche dazu vorgesehen ist, Fluide, insbesondere Gase, aufzunehmen und Reaktionen der Gase, beispielsweise mit Ladungsträgern und/oder Ionen, zu fördern, beispielsweise Elektroden von Brennstoffzellen, an denen Reaktionen zwischen Gasen wie H₂ und O₂, und/oder Ionen wie O²⁻ und/oder freien Elektronen ablaufen. Insbesondere ist die Funktionsschicht als eine Funktionsschicht einer Brennstoffzelle, vorzugsweise einer Festoxidbrennstoffzelle, einer Elektrolysezelle und/oder einer Lambdasonde ausgebildet. Insbesondere ist die Funktionsschicht zumindest teilweise als zumindest ein Teil einer Kathode oder einer Anode einer Festoxidbrennstoffzelle ausgebildet. Die Funktionsschicht wird zumindest teilweise durch einen Urformprozess, insbesondere durch Drucken und/oder Sintern, hergestellt. Insbesondere weist die Brennstoffzelle, Elektrolysezelle und/oder Lambdasonde mehrere Funktionsschichten auf, welche insbesondere zumindest teilweise ein Funktionsschichtpaket ausbilden. Die Lambdasonde, Brennstoff- und/oder Elektrolysezelle weist insbesondere zumindest eine, bevorzugt zumindest zwei und besonders bevorzugt zumindest drei Funktionsschichten auf, wobei zumindest eine Funktionsschicht, vorzugsweise zwei Funktionsschichten als Elektrodenfunktionsschichten, insbesondere als eine Anodenfunktionsschicht und/oder als eine Kathodenfunktionsschicht, ausgebildet sind. Insbesondere weist eine Brennstoffzelle zumindest eine Elektrolytschicht auf, welche insbesondere zwischen zumindest zwei Funktionsschichten angeordnet ist, diese vorzugsweise kontaktiert und besonders bevorzugt mit diesen stoffschlüssig verbunden ist. Insbesondere kann die Lambdasonde, Brennstoff-und/oder Elektrolysezelle zumindest eine bipolare Platte und/oder einen Interkonnektor aufweisen, welcher insbesondere dazu vorgesehen ist zumindest eine Funktionsschicht, insbesondere eine Kathodenfunktionsschicht eines Funktionsschichtelements mit einer weiteren Funktionsschicht, insbesondere einer Anodenfunktionsschicht eines weiteren Funktionsschichtelements, insbesondere elektrisch, zu koppeln. Alternativ kann die Lambdasonde und die Brennstoff-und/oder Elektrolysezelle ein tubulares Trägerelement aufweisen, an welchem zumindest eine Funktionsschicht, insbesondere das Funktionsschichtpaket, angeordnet ist. Insbesondere ist zumindest eine Funktionsschicht auf zumindest einer Seite auf einer Trägerschicht angeordnet. Die Trägerschicht ist insbesondere inert und nichtleitend, beispielsweise aus Forsterit, ausgebildet. Die Elektrolytschicht besteht insbesondere zumindest teilweise, vorzugsweise zumindest zu einem Großteil und besonders bevorzugt vollständig, aus einer Keramik, insbesondere aus yttriumstabilisiertem Zirconiumoxid (YSZ), aus scandiumstabilisiertem Zirconiumoxid (ScSZ) und/oder gadoliniumstabilisiertem Ceroxid (CGO). Das YSZ weist insbesondere die chemische Summenformel YₓZr₁₋ₓO₂ auf, wobei x insbesondere einen Wert zwischen 0,03 und 0,20 oder bevorzugt zwischen 0,16 und 0,20 annimmt. Die Kathodenfunktionsschicht umfasst zumindest eine, bevorzugt zumindest zwei Kathodenfunktionsteilschichten. Die Kathodenfunktionsteilschicht umfasst zumindest eine Kathodenreaktionsschicht und/oder eine Kathodenleitschicht. Zumindest eine, bevorzugt zumindest zwei Kathodenfunktionsteilschichten bestehen insbesondere zumindest teilweise, vorzugsweise zumindest zu einem Großteil und besonders bevorzugt vollständig aus einer Keramik. Die Kathodenleitschicht ist insbesondere dazu vorgesehen elektrische Ladungen zu leiten und dient vorzugsweise als Stromabnehmer. Insbesondere ist die Kathodenleitschicht auf einer Seite mit der Trägerschicht gekoppelt und auf einer der einen Seite gegenüberliegenden Seite mit der Kathodenreaktionsschicht, zumindest elektrisch, gekoppelt. Insbesondere weist die Kathodenleitschicht eine Leitfähigkeit auf, welche insbesondere bei einer Betriebstemperatur von mindestens 750°C, größer als 30 S/cm, vorzugsweise größer als 50 S/cm, bevorzugt größer als 70 S/cm oder besonders bevorzugt größer als 100 S/cm ist. Vorzugsweise ist die Kathodenleitschicht zumindest teilweise durchlässig für Sauerstoffmoleküle ausgebildet. Die Kathodenleitschicht kann insbesondere zumindest teilweise aus Lanthan-Strontium-Manganoxid (LSM) und/oder Lanthan-Strontium-Eisenoxid und/oder Lanthan-Strontium-Kobalt-Eisenoxid und/oder Lanthan-Nickel-Eisenoxid und/oder eine Mischung von Lanthan-Strontium-Kobalt-Eisenoxid und gadoliniumdotiertes Ceroxid gebildet sein. Vorzugsweise ist die Kathodenleitschicht aus Lanthan-Strontium-Manganoxid, welches die chemische Summenformel La_{1-y}Sr_{y}MnO₃ aufweist, wobei y insbesondere Werte zwischen 0,05 und 0,30 annimmt. Vorzugsweise weist die Kathodenleitschicht eine Porosität größer als 20 %, bevorzugt größer als 30 % und besonders bevorzugt kleiner als 40 % auf. Die Kathodenreaktionsschicht ist insbesondere auf einer Seite mit der Elektrolytschicht und auf einer der einen Seite gegenüberliegenden Seite mit der Kathodenleitschicht gekoppelt. Die Kathodenreaktionsschicht kann insbesondere aus einem Kompositmaterial gebildet sein. Vorzugsweise ist die Kathodenreaktionsschicht zumindest teilweise aus yttriumstabilisiertem Zirconiumoxid und/oder zumindest teilweise aus Lanthan-Strontium-Manganoxid ausgebildet. Insbesondere beträgt ein Volumenanteil von YSZ an dem Kompositmaterial mindestens 40 %, bevorzugt mindestens 50 %. Insbesondere beträgt ein Volumenanteil von LSM an dem Kompositmaterial mindestens 40 %, bevorzugt mindestens 50 %. Vorzugsweise weist die Kathodenreaktionsschicht eine Porosität größer als 20 %, bevorzugt größer als 30 % und besonders bevorzugt kleiner als 40 % auf. Insbesondere weist die Kathodenreaktionsschicht eine Vielzahl von Dreiphasengrenzen auf und ist dazu vorgesehen, Sauerstoff zu reduzieren. Unter einer "Dreiphasengrenze" soll insbesondere eine Stelle im Raum verstanden werden, an der ein elektrischer Leiter, ein ionischer Leiter und ein gasförmiges Medium in Kontakt gebracht werden können. Die Anodenfunktionsschicht umfasst zumindest eine, bevorzugt zumindest zwei Anodenfunktionsteilschichten. Die Anodenfunktionsteilschicht umfasst zumindest eine Anodenreaktionsschicht und/oder zumindest eine Anodenleitschicht. Zumindest eine, bevorzugt zwei Anodenfunktionsteilschichten bestehen insbesondere zumindest teilweise, vorzugsweise zumindest zu einem Großteil und besonders bevorzugt vollständig, aus einer Keramik, insbesondere aus einem Verbundstoff von Nickeloxid und yttriumstabilisiertem Zirconiumoxid und/oder aus einem Verbundstoff von Nickeloxid und Ceroxid und/oder gadoliniumstabilisiertem Ceroxid. Zudem können die Funktionsschichten aus anderen dem Fachmann sinnvoll erscheinenden, vorzugsweise porösen Schichten bestehen. Unter dem Ausdruck "zumindest zu einem Großteil" soll dabei insbesondere zumindest zu 55 %, vorteilhaft zumindest zu 65 %, vorzugsweise zumindest zu 75 %, besonders bevorzugt zumindest zu 85 % und besonders vorteilhaft zumindest zu 95 % einer Fläche, eines Volumens, einer Masse und/oder einer Erstreckung, insbesondere einer Haupterstreckung, eines Objekts verstanden werden.

Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Bei einem Verfahren zur Herstellung einer, insbesondere als Kathodenfunktionsschicht ausgebildeten Funktionsschicht ist ein Rohmaterial insbesondere als zumindest ein pulverförmiges Material ausgebildet. Insbesondere ist das pulverförmige Material zumindest als eine pulverförmige Keramik, insbesondere als ein pulverförmiges yttriumstabilisiertes Zirkoniumoxid, als ein pulverförmiges scandiumstabilisiertes Zirkoniumoxid und/oder als ein pulverförmiges gadoliniumstabilisiertes Ceroxid und/oder als ein pulverförmiges Lanthan-Strontium-Manganoxid (LSM) und/oder als ein pulverförmiges Lanthan-Strontium-Eisenoxid und/oder als ein pulverförmiges Lanthan-Strontium-Kobalt-Eisenoxid und/oder als ein pulverförmiges Lanthan-Nickel-Eisenoxid und/oder als eine Mischung zumindest zweier pulverförmiger Keramiken ausgebildet, welche insbesondere mit weiteren, insbesondere organischen Bestandteilen vermischt sein kann, wie insbesondere einem Binder, wie beispielsweise Polyvinylbutral, Acrylat, Methyl- und/oder Ethylcellulose, sowie vorzugsweise einem Lösemittel, wie beispielsweise einem Alkohol oder Ether, sowie einem Dispergator, einem Weichmacher und/oder einem Entschäumer und mit zumindest einem Porenbildner.

Bei einem Verfahren zur Herstellung einer, insbesondere als Anodenfunktionsschicht ausgebildeten Funktionsschicht ist ein Rohmaterial insbesondere als zumindest ein pulverförmiges Material ausgebildet. Insbesondere ist das pulverförmige Material zumindest als eine pulverförmige Keramik, insbesondere als ein pulverförmiges Nickeloxid und/oder als ein pulverförmiges yttriumstabilisiertes Zirconiumoxid und/oder als ein pulverförmiges Ceroxid und/oder als ein gadoliniumstabilisiertes Ceroxid und/oder als eine Mischung zumindest zweier pulverförmiger Keramiken ausgebildet, welche insbesondere mit weiteren, insbesondere organischen Bestandteilen vermischt sein kann, wie insbesondere einem Binder, wie beispielsweise Polyvinylbutral, Acrylat, Methyl- und/oder Ethylcellulose, sowie vorzugsweise einem Lösemittel, wie beispielsweise einem Alkohol oder Ether, sowie einem Dispergator, einem Weichmacher und/oder einem Entschäumer und mit zumindest einem Porenbildner.

Bei einer Herstellung bildet ein Rohmaterial insbesondere eine/n vorzugsweise homogenisierte/n Paste und/oder Schlicker aus. Die Paste und/oder der Schlicker ist insbesondere dazu vorgesehen mittels eines Urformverfahrens, beispielsweise einem Druckverfahren, insbesondere einem Siebdruckverfahren verarbeitet werden zu können.

Unter einem "pulverförmigen Material" soll insbesondere ein körniges und/oder stückiges Gemenge eines Materials verstanden werden, welches in einer schüttfähigen Form vorliegt. Insbesondere weist das Material eine mittlere Partikelgröße von höchstens 20 µm, vorzugsweise höchstens 5 µm, bevorzugt höchstens 3 µm oder besonders bevorzugt höchstens 1 µm auf.

Unter einem "Funktionsschichtelement" soll insbesondere ein Element verstanden werden, welches zumindest eine Funktionsschicht, bevorzugt zumindest ein Funktionsschichtpaket, und/oder eine Elektrolytschicht umfasst.

Unter einer "Partikelgröße" soll insbesondere ein volumenäquivalenter Kugeldurchmesser eines Partikels, insbesondere eines Partikels eines pulverförmigen Materials verstanden werden. Unter einem "volumenäquivalenten Kugeldurchmesser" soll insbesondere der Durchmesser einer Kugel mit gleichem Volumen wie ein betrachtetes Partikel verstanden werden.

Unter einer "Partikelgrößenverteilung" soll insbesondere eine Häufigkeitsverteilung und/oder eine Verteilung einer Anzahl von eine Gesamtheit bildenden Partikeln, insbesondere der Partikel eines Rohmaterials wie dem pulverförmigen Material und/oder eines Porenbildners wie dem ersten weiteren pulverförmigen Material und/oder dem zweiten weiteren pulverförmigen Material, welche insbesondere bei einem Verfahren zu einer Herstellung einer Funktionsschicht verwendet werden, verstanden werden. Unter einer "Gesamtheit" sollen insbesondere alle Partikel eines gleichen Materials verstanden werden, welche insbesondere bei zumindest einem Verfahrensschritt des Verfahrens zur Herstellung einer Funktionsschicht zu einem Gemisch vermischt werden.

Unter einer "wesentlich unterschiedlichen Partikelgrößenverteilung" soll insbesondere verstanden werden, dass alle eine Gesamtheit bildenden Partikel, beispielsweise alle Partikel eines gleichen Rohmaterials, welches in einem Verfahren zu einer Herstellung einer Funktionsschicht verwendet wird, eine Partikelgrößenverteilung mit zumindest einem Maximum aufweisen, und das jedes Maximum der Partikelgrößenverteilung einen Abstand von mindestens 0,1 µm, vorzugsweise mindestens 0,2 µm, bevorzugt mindestens 0,5 µm oder besonders bevorzugt mindestens 1 µm von jedem Maximum einer weiteren Partikelgrößenverteilung einer weiteren Gesamtheit von Partikeln aufweist.

Unter einer "druckbaren Paste" soll insbesondere ein Material verstanden werden, welches mittels eines Druckverfahrens, insbesondere eines Siebdruckverfahrens auf einen Träger aufgebracht werden kann.

Bei einem Sinterverfahrensschritt wird insbesondere das Gemisch auf eine hohe Temperatur erhitzt, wobei die Temperatur insbesondere höher als 1000°C, vorzugsweise höher als 1100°C und bevorzugt niedriger als 1300°C liegt. Insbesondere werden dabei die einzelnen Partikel des Gemischs miteinander versintert. Es ist insbesondere vorstellbar, dass eine einzelne Funktionsschicht durch Sintern hergestellt wird und/oder dass ein Funktionsschichtpaket durch gemeinsames sintern in einem kombinierten Sinterverfahren, insbesondere durch Co-Sintern hergestellt wird, wodurch vorteilhaft eine Produktionszeit verkürzt und damit Kosten eingespart werden können. Insbesondere verflüchtigen, und/oder verbrennen bei dem Sinterverfahrensschritt alle in dem Gemisch enthaltenen Materialien, insbesondere die Porenbildner, außer den Rohmaterialien.

Unter einem "Porenbildner" soll insbesondere ein pulverförmiges Material verstanden werden, welches insbesondere eine Zündtemperatur kleiner als die in dem Verfahren angewandte Sintertemperatur, aufweist. Bei einem Überschreiten der Zündtemperatur entzünden sich die Porenbildner von selbst und verbrennen und/oder zersetzen sich. Nach einem Verbrennen und/oder Zersetzen der Porenbildner bleiben, insbesondere gasgefüllte, Poren in der gesinterten Struktur, beispielsweise der Funktionsschicht, zurück. Porenbildner sind insbesondere dazu vorgesehen, Poren in der Funktionsschicht und/oder dem Funktionsschichtpaket auszubilden. Porenbilder können insbesondere aus einem natürlichen und/oder synthetischen Polymer und/oder einem weiteren organischem Material und/oder aus Kohlenstoff, beispielsweise Flammruß, und/oder einem weiteren dem Fachmann geläufigen Material mit geeigneter Zündtemperatur, welches vorzugsweise rückstandsfrei und/oder rückstandsarm verbrennt und/oder sich zersetzt, ausgebildet sein.

Zudem wird vorgeschlagen, dass zumindest das erste weitere pulverförmige Material und/oder das zweite weitere pulverförmige Material eine monomodale Partikelgrößenverteilung aufweisen, dadurch kann vorteilhaft eine im Wesentlichen gleichbleibende Porengröße und/oder Porengrößenverteilung in der ganzen Funktionsschicht erreicht werden. Dadurch können vorteilhaft gleiche Materialeigenschaften, beispielsweise elektrische Leitfähigkeit und/oder lonenleitfähigkeit, über die ganze Fläche einer Funktionsschicht konstant gehalten werden. Zudem kann vorteilhaft mittels einer Größenauswahl der Partikel der monomodalen Verteilung eine Porengröße und/oder eine Materialeigenschaft eingestellt werden. Unter einer "monomodalen Partikelgrößenverteilung" soll insbesondere eine Partikelgrößenverteilung, insbesondere eine Häufigkeitsverteilung der Partikelgrößen, mit nur einem Gipfel verstanden werden.

Wenn die monomodale Partikelgrößenverteilung des ersten weiteren pulverförmigen Materials und/oder des zweiten weiteren pulverförmigen Materials eine Halbwertsbreite aufweist, welche insbesondere weniger als 10 %, vorzugsweise weniger als 5 %, bevorzugt weniger als 1 % oder besonders bevorzugt weniger als 0.1 % einer mittleren Partikelgröße beträgt, kann vorteilhaft eine genauere Einstellung der Porengröße und/oder der Materialeigenschaften erreicht werden. Dadurch kann vorteilhaft eine Präzision des Verfahrens erhöht werden. Unter einer "Halbwertsbreite" einer, insbesondere monomodalen, Partikelgrößenverteilung soll insbesondere die Differenz zwischen den beiden Werten der Partikelgröße, für die die Werte der Häufigkeit und/oder Anzahl der Partikelgrößenverteilung auf die Hälfte eines Maximalwerts abgesunken sind, verstanden werden.

Wenn zumindest das erste weitere pulverförmige Material eine heteromorphe Partikelstruktur aufweist, kann vorteilhaft eine heteromorphe Porenstruktur erzeugt werden. Mittels einer heteromorphen Porenstruktur können in einer Funktionsschicht vorteilhaft Bereiche und/oder Pfade mit erniedrigtem elektrischen Widerstand und Bereiche mit erhöhter Permeabilität für Gase, insbesondere im Vergleich zu einer Funktionsschicht mit einer im Wesentlichen gleichförmigen Porenstruktur, insbesondere bei gleichen Ausgangspartikelgrößenverteilungen, erzeugt werden. Zudem kann dadurch vorteilhaft eine Anzahl an zur Verfügung stehenden Dreiphasengrenzen erhöht werden.

Ferner wird vorgeschlagen, dass zumindest das erste weitere pulverförmige Material zumindest teilweise, insbesondere vollständig, eine stabförmige Partikelstruktur aufweist. Dadurch kann vorteilhaft eine heteromorphe Porenstruktur erzeugt werden. Mittels einer heteromorphen Porenstruktur können in einer Funktionsschicht vorteilhaft Bereiche und/oder Pfade mit erniedrigtem elektrischen Widerstand und Bereiche mit erhöhter Permeabilität für Gase, insbesondere im Vergleich zu einer Funktionsschicht mit einer im Wesentlichen gleichförmigen Porenstruktur, insbesondere bei gleichen Ausgangspartikelgrößenverteilungen, erzeugt werden. Insbesondere kann durch eine stabförmige Partikelstruktur vorteilhaft in dem Sinterverfahrensschritt eine stabförmige Porenstruktur erzeugt werden. Zudem kann dadurch vorteilhaft eine Anzahl an zur Verfügung stehenden Dreiphasengrenzen erhöht werden. Unter einem Partikel mit einer "stabförmigen Partikelstruktur" sollen insbesondere Partikel verstanden werden, welche eine Längenerstreckung entlang einer Haupterstreckungsrichtung aufweisen, welche mindestens doppelt so lang, vorzugsweise mindestens fünfmal so lang, bevorzugt mindestens zehnmal so lang oder besonders bevorzugt mindestens dreißigmal so lang ist wie eine Längenerstreckung senkrecht zu einer Haupterstreckungsrichtung. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt. Eine stabförmige Partikelstruktur kann insbesondere als eine Faserstruktur ausgebildet sein. Insbesondere ist vorstellbar, dass stabförmige Partikel in zumindest einer Raumrichtung eine Ausdehnung aufweisen, welche wesentlich kleiner ist als ein mittlerer Durchmesser der Partikel des pulverförmigen Rohmaterials während eine Ausdehnung in eine weitere Raumrichtung wesentlich größer ist als ein mittlerer Durchmesser der Partikel des pulverförmigen Rohmaterials.

Zudem wird vorgeschlagen, dass zumindest das erste weitere pulverförmige Material zumindest teilweise, insbesondere vollständig, eine verzweigte Partikelstruktur aufweist. Dadurch kann vorteilhaft eine heteromorphe Porenstruktur erzeugt werden. Mittels einer heteromorphen Porenstruktur können in einer Funktionsschicht vorteilhaft Bereiche und/oder Pfade mit erniedrigtem elektrischen Widerstand und Bereiche mit erhöhter Permeabilität für Gase, insbesondere im Vergleich zu einer Funktionsschicht mit einer im Wesentlichen gleichförmigen Porenstruktur, insbesondere bei gleichen Ausgangspartikelgrößenverteilungen, erzeugt werden. Insbesondere kann durch eine verzweigte Partikelstruktur vorteilhaft in dem Sinterverfahrensschritt eine verzweigte Porenstruktur erzeugt werden. Zudem kann dadurch vorteilhaft eine Anzahl an zur Verfügung stehenden Dreiphasengrenzen erhöht werden. Unter Partikeln mit einer "verzweigten Partikelstruktur" sollen insbesondere Partikel verstanden werden, welche zumindest zwei Teilbereiche aufweisen, deren Haupterstreckungsrichtungen in einem Winkel zueinander stehen. Beispielsweise können Partikel mit einer verzweigten Partikelstruktur als Agglomeration von einer Mehrzahl kleinerer Partikel, beispielsweise Nanopartikel, Kohlenstoffpartikel wie Ruß und/oder Kohlenstöffnanoröhrchen ausgebildet sein. Insbesondere ist vorstellbar, dass verzweigte Partikel in zumindest einer Raumrichtung eine Ausdehnung aufweisen, welche wesentlich kleiner ist als ein mittlerer Durchmesser der Partikel des pulverförmigen Rohmaterials während eine Ausdehnung in eine weitere Raumrichtung wesentlich größer ist als ein mittlerer Durchmesser der Partikel des pulverförmigen Rohmaterials.

Wenn das erste weitere pulverförmige Material eine mittlere Partikelgröße aufweist, welche insbesondere mindestens dreimal, vorzugsweise mindestens fünfmal oder bevorzugt mindestens zehnmal größer ist als eine mittlere Partikelgröße des zweiten weiteren pulverförmigen Materials kann vorteilhaft eine Porosität der Funktionsschicht optimiert werden. Insbesondere können vorteilhaft Poren unterschiedlicher Größe in der Funktionsschicht erzeugt werden. Vorteilhaft können kleinere Poren in den Zwischenräumen zwischen größeren Poren untergebracht werden. Dadurch können in einer Funktionsschicht vorteilhaft Bereiche und/oder Pfade mit erniedrigtem elektrischen Widerstand und Bereiche mit erhöhter Permeabilität für Gase, insbesondere im Vergleich zu einer Funktionsschicht mit einer im Wesentlichen gleichförmigen Porenstruktur erzeugt werden. Zudem kann dadurch vorteilhaft eine Anzahl an zur Verfügung stehenden Dreiphasengrenzen erhöht werden. Es ist beispielsweise vorstellbar, dass das erste weitere pulverförmige Material eine mittlere Partikelgröße von 1 µm aufweist und dass das zweite weitere pulverförmige Material eine mittlere Partikelgröße von mindestens 3 µm aufweist. Alternativ ist vorstellbar, dass das erste weitere pulverförmige Material eine mittlere Partikelgröße aufweist, welche kleiner ist, insbesondere mindestens dreimal kleiner, vorzugsweise mindestens fünfmal kleiner oder bevorzugt mindestens zehnmal kleiner als die mittlere Partikelgröße des zweiten weiteren pulverförmigen Materials. Dadurch kann vorteilhaft eine Porosität der Funktionsschicht optimiert werden. Insbesondere können vorteilhaft Poren unterschiedlicher Größe in der Funktionsschicht erzeugt werden.

Zudem wird vorgeschlagen, dass das erste weitere pulverförmige Material und/oder das zweite weitere pulverförmige Material eine mittlere Partikelgröße aufweist, welche mindestens dreimal, vorzugsweise mindestens fünfmal oder bevorzugt mindestens zehnmal größer ist als eine mittlere Partikelgröße des pulverförmigen Materials, dadurch kann vorteilhaft eine Porosität der Funktionsschicht optimiert werden. Insbesondere können durch Porenbildner, welche größer sind als die Partikel des Ausgangsmaterials vorteilhaft große Poren mit dazwischen liegenden Bereichen geringer Porosität erzeugt werden, welche vorteilhaft eine erhöhte lonenleitfähigkeit ermöglichen können. Insbesondere kann eine Tortuosität der Porenräume vorteilhaft verringert werden. Es ist beispielsweise vorstellbar, dass das pulverförmige Material eine mittlere Partikelgröße von 1 µm aufweist und dass das erste und/oder das zweite weitere pulverförmige Material eine mittlere Partikelgröße von mindestens 3 µm aufweist.

Außerdem wird vorgeschlagen, dass das erste weitere pulverförmige Material und/oder das zweite weitere pulverförmige Material eine mittlere Partikelgröße aufweist, welche mindestens im Wesentlichen gleich ist wie eine mittlere Partikelgröße des pulverförmigen Materials, dadurch kann vorteilhaft eine Porosität der Funktionsschicht optimiert werden. Unter "im Wesentlichen gleich" soll hierbei insbesondere eine relative Abweichung der mittleren Partikelgrößen von weniger als 15 %, vorzugsweise weniger als 10 %, bevorzugt weniger als 5 % oder besonders bevorzugt weniger als 1 % verstanden werden.

Ferner wird vorgeschlagen, dass in zumindest einem Verfahrensschritt zumindest eine Auswahl einer Partikelgröße und/oder einer Partikelstruktur des ersten weiteren pulverförmigen Materials und des zweiten weiteren pulverförmigen Materials getroffen wird, zur Einstellung zumindest eines Materialparameters zumindest eines Teils des Funktionsschichtelements, insbesondere einer Brennstoffzelle. Dadurch kann vorteilhaft ein für eine bestimmte Anwendung vorteilhafter Materialparameter einer Funktionsschicht, beispielsweise eine Gas-Permeabilität, eine elektrische und/oder ionische Leitfähigkeit, eine Tortuosität und/oder eine Anzahl an Reaktionszentren, insbesondere sogenannten Dreiphasengrenzen, erreicht werden. Mittels einer derartigen Einstellbarkeit kann vorteilhaft eine Effizienz des Verfahrens, beispielsweise durch eine Verringerung von Ausschuss oder Fehlproduktionen, sowie eine Flexibilität des Verfahrens erhöht werden. Zudem kann vorteilhaft eine Leistungsfähigkeit und/oder ein Verhalten einer Funktionsschicht angepasst und verbessert werden, wodurch vorteilhaft eine Gesamtleistung und/oder eine Effizienz eines Systems, welches die Funktionsschicht aufweist, beispielsweise eine Festoxidbrennstoffzelle, verbessert werden kann.

Das erfindungsgemäße Verfahren zur Herstellung einer Funktionsschicht soll hierbei nicht auf die oben beschriebene Anwendung und Ausführungsform beschränkt sein. Insbesondere kann das erfindungsgemäße Verfahren zur Herstellung einer Funktionsschicht zu einer Erfüllung einer hierin beschriebenen Funktionsweise eine von einer hierin genannten Anzahl von Verfahrensschritten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: Einen Ausschnitt eines Schnitts durch eine schematische Brennstoffzelle mit zwei in Serie geschalteten Funktionsschichtelementen mit einer Mehrzahl an Funktionsschichten,
- Fig. 2: ein Ablaufdiagramm eines Verfahrens zur Herstellung einer Funktionsschicht,
- Fig. 3: eine Partikelgrößenverteilung eines pulverförmigen Materials,
- Fig. 4: ein Gemisch in sieben beispielhaften Ausführungen und
- Fig. 5: Funktionsschichten mit unterschiedlichen Porengrößen, welche mittels verschiedener Gemische hergestellt wurden.

### Beschreibung des Ausführungsbeispiels

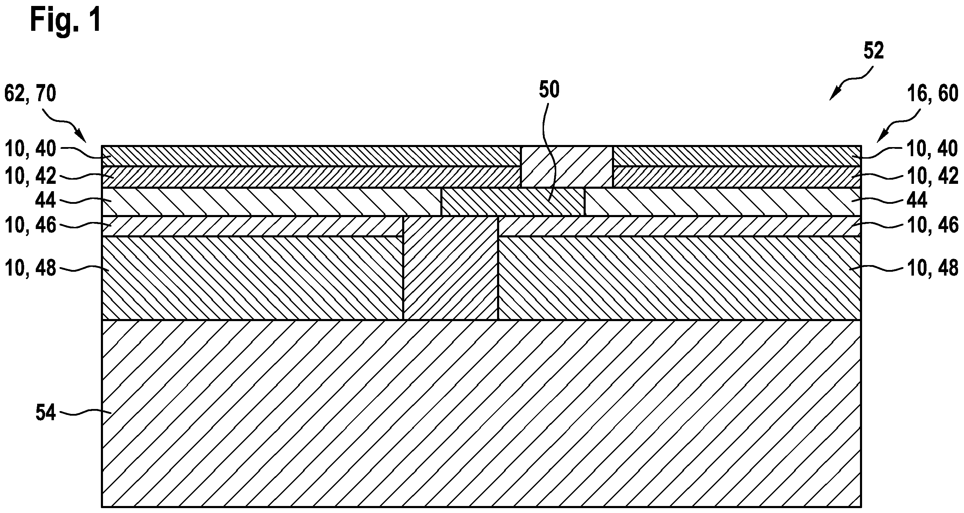

Fig. 1 zeigt eine schematische Darstellung eines Schnitts durch eine Mehrzahl an Funktionsschichten 10, zwei Elektrolytschichten 40 und einer Trägerschicht 54 einer Brennstoffzelle 52. Die Funktionsschichten 10 bilden zwei Funktionsschichtpakete 60, 70 aus. Ein Funktionsschichtpaket 60, 70 bildet jeweils ein Funktionsschichtelement 16, 62 aus. Im gezeigten Ausführungsbeispiel weist das Funktionsschichtelement 16, 62 vier Funktionsschichten 10 und eine Elektrolytschicht 44 auf. Eine erste Funktionsschicht 10 ist als Anodenleitschicht 40 ausgebildet. Eine zweite Funktionsschicht 10 ist als Anodenreaktionsschicht 42 ausgebildet. Eine dritte Funktionsschicht 10 ist als Kathodenreaktionsschicht 46 ausgebildet. Eine vierte Funktionsschicht 10 ist als Kathodenleitschicht 48 ausgebildet.

Die Funktionsschichtelemente 16, 62 sind elektrisch gekoppelt mittels einem Interkonnektor 50 der Brennstoffzelle 52. Der Interkonnektor 50 koppelt die Anodenreaktionsschicht 42 eines Funktionsschichtelements 62 elektrisch mit der Kathodenreaktionsschicht 46 eines weiteren Funktionsschichtelements 16. Der Interkonnektor 50 bildet eine Barriere zwischen der Elektrolytschicht 44 eines Funktionsschichtelements 16, 62 und der Elektrolytschicht 44 eines weiteren Funktionsschichtelements 16, 62 aus. Die Funktionsschichtelemente 16, 62 sind elektrisch in Reihe geschaltet.

Die Anodenleitschicht 40 ist mit der Anodenreaktionsschicht 42 gekoppelt. Die Anodenreaktionsschicht 42 ist mit der Elektrolytschicht 44 gekoppelt. Die Anodenreaktionsschicht 42 ist mit dem Interkonnektor 50 gekoppelt. Die Elektrolytschicht 44 ist mit der Kathodenreaktionsschicht 46 gekoppelt. Die Elektrolytschicht 44 ist mit dem Interkonnektor 50 gekoppelt. Die Kathodenreaktionsschicht 46 ist mit der Kathodenleitschicht 48 gekoppelt. Die Kathodenreaktionsschicht 46 ist mit dem Interkonnektor 50 gekoppelt. Die Kathodenleitschicht 48 ist mit einer Trägerschicht 54 der Brennstoffzelle 52 gekoppelt.

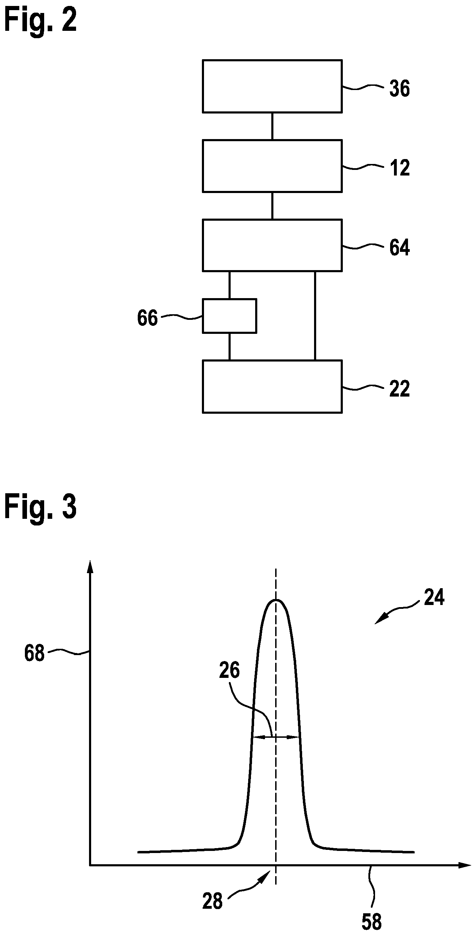

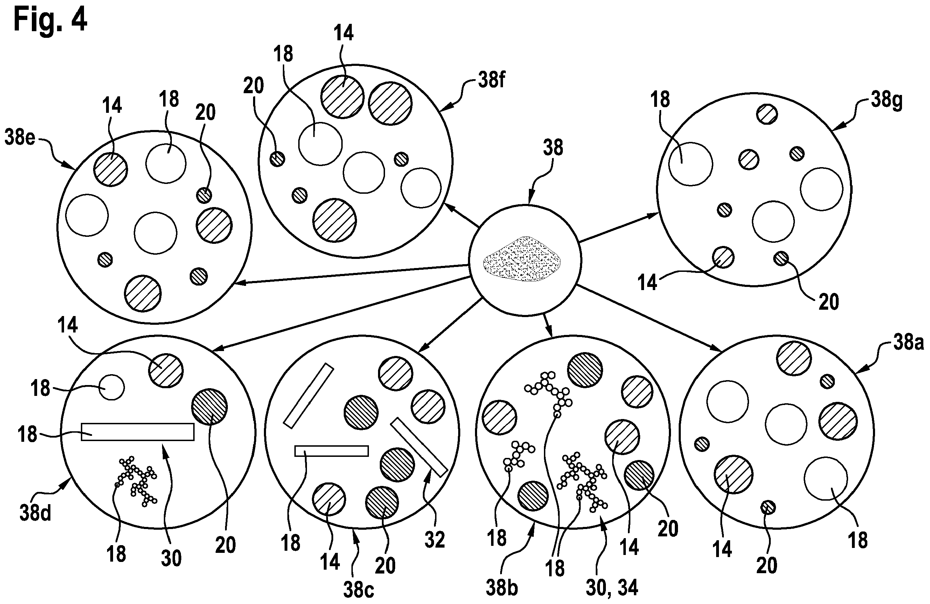

Fig. 2 zeigt ein Ablaufdiagramm eines Verfahrens zur Herstellung einer Funktionsschicht 10. In zumindest einem Verfahrensschritt 12 wird ein pulverförmiges Material 14 mit einem ersten weiteren pulverförmigen Material 18 und einem zweiten weiteren pulverförmigen Material 20 vermischt (vgl. Fig. 4). Das pulverförmige Material 14 ist zur Ausbildung eines Teils des Funktionsschichtelements 16, 62 vorgesehen. Das erste weitere pulverförmige Material 18 und das zweite weitere pulverförmigen Material 20 unterscheiden sich wesentlich in ihrer Partikelgrößenverteilung 24 (vgl. Fig. 3). Das erste weitere pulverförmige Material 18 und das zweite weitere pulverförmigen Material 20 sind als Porenbildner ausgebildet. Das pulverförmige Material 14, das erste weitere pulverförmige Material 18 und das zweite weitere pulverförmigen Material 20 bilden ein Gemisch 38, 38a-g. Insbesondere kann das Gemisch 38, 38a-g weitere Bestandteile, beispielsweise pulverförmige und/oder flüssige Materialien, insbesondere zur Einstellung vorteilhafter rheologischer Eigenschaften für die Verarbeitung des Gemischs mit einem Druckverfahren, umfassen.

In zumindest einem Verfahrensschritt 36 wird eine Auswahl einer Partikelgröße 28 (vgl. Fig. 3) und/oder einer Partikelstruktur 30, 32, 34 (vgl. Fig. 4) des ersten weiteren pulverförmigen Materials 18 und des zweiten weiteren pulverförmigen Materials 20 getroffen. In zumindest einem Verfahrensschritt 36 wird mittels der getroffenen Auswahl ein Materialparameter eines Teils des Funktionsschichtelements 16, 62, insbesondere eines Endprodukts des Verfahrens, eingestellt.

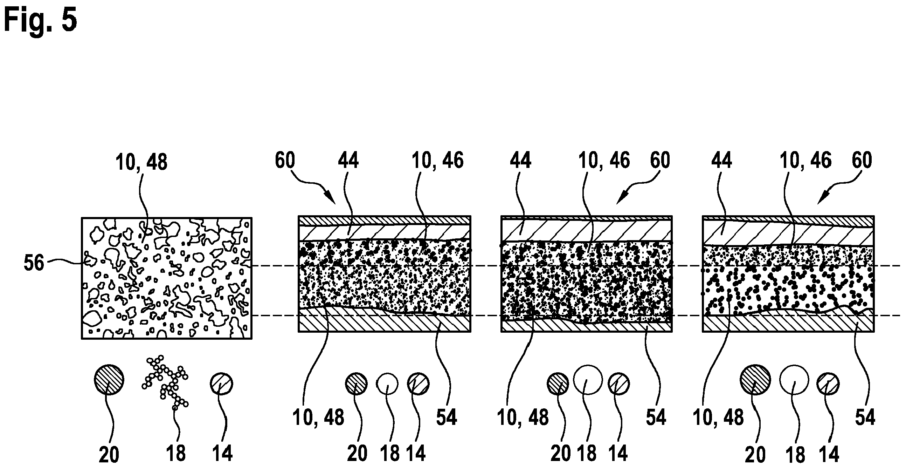

In zumindest einem Verfahrensschritt 64 wird das Gemisch 38, 38a-g in einer Schicht auf einem Träger aufgebracht und/oder aufgedruckt. In zumindest einem Verfahrensschritt 66 wird zumindest ein weiteres Gemisch 38, 38a-g in einer weiteren Schicht auf die bereits vorhandene Schicht aufgebracht. In zumindest einem Verfahrensschritt 22 wird das Gemisch 38, 38a-g gesintert und/oder die Schichtfolge einer Mehrzahl an Gemischen 38, 38a-g co-gesintert. Bei dem Sintervorgang und/oder dem Co-Sintervorgang verfestigt sich das Gemisch 38, 38ag zumindest teilweise. Bei dem Sintervorgang und/oder dem Co-Sintervorgang entsteht die fertige Funktionsschicht 10 oder das fertige Funktionsschichtpaket 60, 70. In zumindest einem Verfahrensschritt 22 verschwindet das erste pulverförmige Material 18 und das zweite pulverförmige Material 20 zu einem Großteil, vorzugsweise vollständig, aus dem Gemisch 38, 38a-g. In zumindest einem Verfahrensschritt 22 hinterlassen das erste pulverförmige Material 18 und das zweite pulverförmige Material 20 Hohlräume in dem verfestigten Gemisch 38, 38a-g. In zumindest einem Verfahrensschritt 22 entstehen Poren 56 (vgl. Fig. 5) in der Funktionsschicht 10 oder dem Funktionsschichtpaket 60, 70.

Fig. 3 zeigt eine Partikelgrößenverteilung 24 des pulverförmigen Materials 14 und/oder des ersten weiteren pulverförmigen Materials 18 und/oder des zweiten weiteren pulverförmigen Materials 20. Entlang der Abszisse 58 ist eine Partikelgröße aufgetragen. Entlang der Ordinate 68 ist eine Häufigkeit oder eine Anzahl aufgetragen. Die in Fig. 3 gezeigte Partikelgrößenverteilung 24 ist eine monomodale Partikelgrößenverteilung 24 mit einer mittleren Partikelgröße 28. Die monomodale Partikelgrößenverteilung 24 des ersten weiteren pulverförmigen Materials 18 und/oder des zweiten weiteren pulverförmigen Materials 20 weist eine Halbwertsbreite 26 auf. Die Halbwertsbreite 26 beträgt weniger als 10 % einer mittleren Partikelgröße 28.

Fig. 4 zeigt eine Übersicht über die Bestandteile verschiedener Gemische 38, 38a-g. Das erste weitere pulverförmige Material 18 und das zweite weitere pulverförmige Material 20 des Gemischs 38a, 38e, 38f weisen eine monomodale Partikelgrößenverteilung 24 auf.

Das erste weitere pulverförmige Material 18 des Gemischs 38b, 38d weist eine heteromorphe Partikelstruktur 30 auf.

Das erste weitere pulverförmige Material 18 des Gemischs 38c weist eine stabförmige Partikelstruktur 32 auf.

Das erste weitere pulverförmige Material 18 des Gemischs 38b weist eine verzweigte Partikelstruktur 34 auf.

Das erste weitere pulverförmige Material 18 des Gemischs 38e, 38f, 38g weist eine mittlere Partikelgröße 28 auf, welche mindestens 3-mal größer ist als eine mittlere Partikelgröße 28 des zweiten weiteren pulverförmigen Materials 20.

Das erste weitere pulverförmige Material 18 und das zweite weitere pulverförmige Material 20 des Gemischs 38g weisen eine mittlere Partikelgröße 28 auf, welche mindestens 3-mal größer ist als eine mittlere Partikelgröße 28 des pulverförmigen Materials 14.

Das erste weitere pulverförmige Material 18 des Gemischs 38f oder das zweite weitere pulverförmige Material 20 des Gemischs 38b, 38c weist eine mittlere Partikelgröße 28 auf, welche mindestens im Wesentlichen gleich ist wie eine mittlere Partikelgröße 28 des pulverförmigen Materials 14.

Alternativ oder zusätzlich ist vorstellbar, dass ein Fachmann die in Fig. 4 gezeigten Gemische 38a-g zu weiteren Kombinationen sinnvoll kombiniert.

Fig. 5 zeigt Funktionsschichten 10 mit Poren 56, welche mittels verschiedener Gemische 38, 38a-g, welche in Fig. 5 jeweils unterhalb der Funktionsschichten 10 gezeigt sind, hergestellt wurden.

Die in Fig. 5 ganz rechts gezeigten Funktionsschichten 10, welche mittels einer Kombination zweier weiterer pulverförmiger Materialien 18, 20 mit einer, insbesondere in Relation zu dem verwendeten pulverförmigen Material 14, welches eine Korngröße von 1 µm aufweist, großen Korngröße von 5 µm hergestellt sind, weisen vorteilhaft eine hohe Porosität auf. Die Porosität beträgt in diesen Funktionsschichten mehr als 30 %. Zudem weisen die in Fig. 5 ganz rechts gezeigten Funktionsschichten 10, insbesondere trotz einer hohen Porosität, vorteilhaft eine gute Leitfähigkeit auf. Die Leitfähigkeit beträgt in diesen Funktionsschichten 10 mehr als 65 S/cm bei einer Temperatur der Funktionsschichten 10 von 750°C.

Die in Fig. 5 ganz links gezeigten Funktionsschichten 10, welche mittels einer Kombination eines ersten pulverförmigen Materials 18 mit einer verzweigte Partikelstruktur 34 und eines zweiten pulverförmigen Materials 20 mit einer, insbesondere in Relation zu dem verwendeten pulverförmigen Material 14, welches eine Korngröße von 1 µm aufweist, großen Korngröße von 5 µm hergestellt sind, weisen eine Porosität von 25 % und eine Leitfähigkeit größer als 60 S/cm bei einer Temperatur der Funktionsschichten 10 von 750°C auf. Vorteilhaft weisen die in Fig. 5 ganz links gezeigten Funktionsschichten 10 eine gute Gas-Permeabilität und eine hohe Zahl an Dreiphasengrenzen auf, insbesondere im Vergleich zu den in Fig. 5 ganz rechts gezeigten Funktionsschichten 10. Vorteilhaft sind die Poren 56, welche aus dem zweiten pulverförmigen Material 20 hergestellt sind, gut miteinander verbunden, insbesondere mittels Poren 56, welche aus dem ersten pulverförmigen Material 18 hergestellt sind.

## Patentansprüche

1. Verfahren zur Herstellung einer Funktionsschicht (10), insbesondere einer Brennstoffzellenfunktionsschicht, mit zumindest einem Verfahrensschritt (12), in dem zumindest ein pulverförmiges Material (14), welches zur Ausbildung zumindest eines Teils eines Funktionsschichtelements (16, 62) vorgesehen ist, mit zumindest einem ersten weiteren pulverförmigen Material (18) und mit zumindest einem zweiten weiteren pulverförmigen Material (20), welches sich von dem ersten weiteren pulverförmigen Material (18) wesentlich in zumindest seiner Partikelgrößenverteilung (24) unterscheidet, zu einem Gemisch (38) vermischt wird, und mit zumindest einem weiteren Verfahrensschritt (22), in dem das Gemisch (38, 38a-g) gesintert wird, **dadurch gekennzeichnet, dass** das erste weitere pulverförmige Material (18) und das zweite weitere pulverförmige Material (20) als Porenbildner ausgebildet sind.

2. Verfahren zur Herstellung einer Funktionsschicht (10) nach Anspruch 1, **dadurch gekennzeichnet, dass** zumindest das erste weitere pulverförmige Material (18) und/oder das zweite weitere pulverförmige Material (20) eine monomodale Partikelgrößenverteilung (24) aufweisen.

3. Verfahren zur Herstellung einer Funktionsschicht (10) nach Anspruch 2, **dadurch gekennzeichnet, dass** die monomodalen Partikelgrößenverteilungen (24) des ersten weiteren pulverförmigen Materials (18) und/oder des zweiten weiteren pulverförmigen Materials (20) eine Halbwertsbreite (26) aufweisen, welche weniger als 10 % einer mittleren Partikelgröße (28) beträgt.

4. Verfahren zur Herstellung einer Funktionsschicht (10) nach einem der vorhergehenden Ansprüche, **dadurch gekennzeichnet, dass** zumindest das erste weitere pulverförmige Material (18) eine heteromorphe Partikelstruktur (30) aufweist.

5. Verfahren zur Herstellung einer Funktionsschicht (10) nach einem der vorhergehenden Ansprüche, **dadurch gekennzeichnet, dass** zumindest das erste weitere pulverförmige Material (18) zumindest teilweise eine stabförmige Partikelstruktur (32) aufweist.

6. Verfahren zur Herstellung einer Funktionsschicht (10) nach einem der vorhergehenden Ansprüche, **dadurch gekennzeichnet, dass** zumindest das erste weitere pulverförmige Material (18) zumindest teilweise eine verzweigte Partikelstruktur (34) aufweist.

7. Verfahren zur Herstellung einer Funktionsschicht (10) nach einem der vorhergehenden Ansprüche, **dadurch gekennzeichnet, dass** das erste weitere pulverförmige Material (18) eine mittlere Partikelgröße (28) aufweist, welche mindestens 3-mal größer ist als eine mittlere Partikelgröße (28) des zweiten weiteren pulverförmigen Materials (20).

8. Verfahren zur Herstellung einer Funktionsschicht (10) nach einem der vorhergehenden Ansprüche, **dadurch gekennzeichnet, dass** das erste weitere pulverförmige Material (18) und/oder das zweite weitere pulverförmige Material (20) eine mittlere Partikelgröße (28) aufweist, welche mindestens 3-mal größer ist als eine mittlere Partikelgröße (28) des pulverförmigen Materials (14).

9. Verfahren zur Herstellung einer Funktionsschicht (10) nach einem der vorhergehenden Ansprüche, **dadurch gekennzeichnet, dass** das erste weitere pulverförmige Material (18) und/oder das zweite weitere pulverförmige Material (20) eine mittlere Partikelgröße (28) aufweist, welche mindestens im Wesentlichen gleich ist wie eine mittlere Partikelgröße (28) des pulverförmigen Materials (14).

10. Verfahren zur Herstellung einer Funktionsschicht (10) nach einem der vorhergehenden Ansprüche, **dadurch gekennzeichnet, dass** in zumindest einem Verfahrensschritt (36) zumindest eine Auswahl einer Partikelgröße (28) und/oder einer Partikelstruktur (30, 32, 34) des ersten weiteren pulverförmigen Materials (18) und des zweiten weiteren pulverförmigen Materials (20) getroffen wird, zur Einstellung zumindest eines Materialparameters zumindest eines Teils des Funktionsschichtelements (16, 62).
